# Europäisches Patentamt
# European Patent Office
# Office européen des brevets

(19)

(11) Veröffentlichungsnummer: **0 038 504**
**B1**

(12) **EUROPÄISCHE PATENTSCHRIFT**

(45) Veröffentlichungstag der Patentschrift:
15.02.84

(51) Int. Cl.³: **H 02 K 9/20,** H 02 K 55/00,
H 01 F 7/22

(21) Anmeldenummer: **81102819.0**

(22) Anmeldetag: **13.04.81**

(54) **Anordnung zur Kühlung einer supraleitenden Magnetwicklung.**

(30) Priorität: **23.04.80 DE 3015682**

(43) Veröffentlichungstag der Anmeldung:
**28.10.81 Patentblatt 81/43**

(45) Bekanntmachung des Hinweises auf die Patenterteilung:
**15.02.84 Patentblatt 84/7**

(84) Benannte Vertragsstaaten:
**CH FR GB LI**

(56) Entgegenhaltungen:
**EP - A - 0 009 196**
**DE - A - 2 530 100**
**FR - A - 2 309 068**

(73) Patentinhaber: **SIEMENS AKTIENGESELLSCHAFT,**
**Berlin und München Wittelsbacherplatz 2,**
**D-8000 München 2 (DE)**

(72) Erfinder: **Intichar, Lutz, Dr., Max-Busch-Strasse 12,**
**D-8520 Erlangen (DE)**
Erfinder: **Schnapper, Christoph, Dr., Lachnerstrasse 63,**
**D-8520 Erlangen (DE)**
Erfinder: **Weghaupt, Erich, Rathenaustrasse 10,**
**D-4330 Mülheim/Ruhr (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Anordnung zur Kühlung einer supraleitenden Magnetwicklung

Die Erfindung bezieht sich auf eine Anordnung zur Kühlung einer supraleitenden Magnetwicklung, insbesondere der supraleitenden Erregerwicklung im Läufer einer elektrischen Maschine, mit mindestens einem Kühlmittelraum, der im Betriebszustand eine dampfförmige und flüssige Phase eines über mindestens eine Zuführungsleitung in ihn eingeleiteten Kühlmittels enthält, dessen von der flüssigen Phase eingenommener Flüssigkeitsraum mit den Kühlmittelwegen durch die Magnetwicklung verbunden ist und an dessen von der gasförmigen Phase eingenommenen Dampfraum mindestens eine Kühlmittelabführungsleitung mit vorbestimmtem, grossem Strömungswiderstand angeschlossen ist.

Eine entsprechende Anordnung zur Kühlung einer supraleitenden Magnetwicklung ist aus dem Bericht des Electric Power Research Institute, USA: «EPRI TD-255, Project 672-1, Final Report», August 1976, Seiten 45 bis 52 bekannt. Bei dieser Magnetwicklung handelt es sich um die supraleitende Erregerwicklung eines Turbogenerators. Das zur Kühlung dieser Erregerwicklung erforderliche Helium wird von einer externen Kältemaschine aus über eine rotierende Helium-Kupplung zentral durch die Rotorwelle geführt und in einen dort vorhandenen achsnahen Kühlmittelraum eingeleitet. In dem Kühlmittelraum befindet sich ein Zweiphasengemisch aus flüssigem und gasförmigem Kühlmittel. Aufgrund der bei Rotation auf dieses Zweiphasengemisch einwirkenden Zentrifugalkräfte werden die flüssige Phase in achsfernen Bereichen und die dampfförmige Phase in achsnahen Bereichen des Kühlmittelraumes angelagert. Das flüssige Kühlmittel durchströmt die Kühlmittelwege durch die supraleitende Erregerwicklung, wobei die eingeleitete oder entstehende Wärme an das Kühlmittel abgegeben wird. Die Kühlmittelströmung erfolgt bei der bekannten Kühlanordnung aufgrund eines sogenannten Selbstpump-Effektes in Thermosyphon-Schleifen. Die von dem Kühlmittel aufgenommenen Wärmemengen bewirken eine Temperaturerhöhung und teilweise Verdampfung. Der Kühlmitteldampf lagert sich dann in einem zentralen Teilraum des Kühlmittelraumes an. Aus diesem Dampfraum wird über eine Kühlmittelabführungsleitung gasförmiges Kühlmittel entnommen, das z.B. noch zur Kühlung von Teilen des Läuferkörpers herangezogen werden kann.

Supraleitende Magnetwicklungen müssen im allgemeinen so ausgelegt sein, dass sie einen als Quench bezeichneten plötzlichen Übergang vom supraleitenden in den normalleitenden Zustand unbeschadet überstehen. Bei einem solchen Quench wird ein Teil der in der Wicklung magnetisch gespeicherten Energie innerhalb kurzer Zeit in Wärme umgesetzt. Die dabei teilweise an das Kühlmittel abgegebene Wärme führt zu einer Verdampfung und damit zu einem Druckanstieg in der Kühlanordnung.

Diese Situation ist bei Turbogeneratoren mit supraleitenden Erregerwicklungen besonders kritisch. Die in diesen Wicklungen gespeicherte magnetische Energie ist nämlich im allgemeinen so gross, dass bei einem Quench das gesamte Kühlmittel verdampft. Da in der Regel zusätzliche Überdruckventile oder Berstscheiben vermieden werden sollen, kann der entstehende Druck in dem im Läufer untergebrachten Teil der Kühlanordnung nur über die Kühlmittelabführungsleitungen des Läufers abgebaut werden. Die Strömungswiderstände dieser Abführungsleitungen sind aber aufgrund des begrenzten Raumes wegender Unterbringung der Erregerstromzuleitungen und der erforderlichen Evakuierungsleitungen in einem Läufer verhältnismässig gross. Bei grösseren Generatoren sind ferner diese Abführungsleitungen verhältnismässig lang, beispielsweise mehrere Meter. Dürüber hinaus können diese Leitungen nur schwer ausreichend gross dimensioniert werden, da sonst unerwünschte Nebenerscheinungen wie z.B. Sekundärströmungen auftreten, die zu einem erhöhten Wärmetransport und somit zu entsprechender Verlustleistung führen. Der die Kühlmittelflüssigkeit und den Kühlmitteldampf aufnehmende Kühlmittelraum im Zentrum des Läuferkörpers ist ebenfalls sehr begrenzt. In diesem Raum muss jedoch genügend Flüssigkeit gespeichert sein, damit für alle zu erwartenden Betriebsfälle eine ausreichende Kühlmittelreserve vorhanden ist. Dadurch steht für den Kühlmitteldampf im Zentrum des Läufers nur sehr wenig Platz zur Verfügung. Ausserdem wird in den rotierenden supraleitenden Magnetwicklungen im Gegensatz zu nicht-rotierenden Wicklungen infolge der grossen Zentrifugalkräfte ein bedeutend besserer Wärmeübergang bewirkt. Dies hat zur Folge, dass auch das Kühlmittel schneller verdampft als in vergleichbaren nicht-rotierenden Magnetwicklungen. Bei entsprechenden Kühlanordnungen kann dann bei einem plötzlichen Quench die Kühlmitteldampfmenge sehr stark ansteigen, so dass beispielsweise ein Druck von 50 bar und mehr erreicht wird. Hierbei besteht die Gefahr eines Berstens von Teilen der Kühlanordnung, falls nicht besondere Vorkehrungen getroffen werden.

Man ist deshalb bestrebt, für die Kühlanordnung einer Magnetwicklung genügend weite und kurze Kühlmittelabführungsleitungen vorzusehen, so dass der Kühlmitteldampf beispielsweise über ein Überdruckventil in die Atmosphäre oder in einen Auffangbehälter abgegeben werden kann. Entsprechende Massnahmen können jedoch aus Platzgründen nicht überall verwirklicht werden.

Man hat deshalb die Kühlmittelzuführungskanäle der Kühlanordnung einer supraleitenden Erregerwicklung auch so angeordnet, dass bei einem Quench ein grosser Teil des Kühlmittels in flüssiger Form durch diese Kanäle aus dem Läufer herausgeführt wird. In dem im Läufer vorhandenen Kühlsystem kann dann nur entsprechend wenig Kühlmittel verdampfen (vgl. Bericht des Electric Power Research Institute, USA: «EPRI EL-577, Project 429-1, Final Report», November 1977, Seite 3-289). Ferner hat man auch die Kühlanordnung im Läufer eines supraleitenden Generators so auszulegen versucht, dass überhaupt nur verhältnismässig wenig Kühlmittel in dem Läufer vorhanden ist (Bericht des Electric Power Research Institute, USA: «EPRI EL-663, Vol. 1, Project 429-2, Final Report», März 1978, Seiten 2-112 bis 2-114). Eine derartige Auslegung der Kühlanordnung ist jedoch nur für Erregerwicklungen von verhältnismässig kleinen Maschinen möglich.

Aufgabe der vorliegenden Erfindung ist es, die eingangs genannte Kühlanordnung dahingehend zu verbessern, dass mit ihr auch bei verhältnismässig grossen Magnetwicklungen ein zu starkes Ansteigen des Kühlmitteldampfdruckes beim Übergang vom supraleitenden in den normalleitenden Zustand vermieden wird.

Diese Aufgabe wird erfindungsgemäss dadurch gelöst, dass an den von der gasförmigen Phase eingenommenen Dampfraum zusätzlich ein Pufferbehälter über einen Verbindungsweg mit verhältnismässig kleinem Strömungswiderstand angeschlossen ist.

Die Vorteile dieser Gestaltung der Kühlanordnung bestehen insbesondere darin, dass die bei einem Quench auftretenden grossen Mengen an Kühlmitteldampf ohne weiteres auch in den Pufferbehälter gelangen können. Durch die Vergrösserung des zur Verfügung stehenden Volumens wird eine entsprechende Verringerung des Druckanstieges erreicht. Der Druckanstieg einer solchen Anordnung ist dann annähernd um das Verhältnis von Dampfvolumen ohne Druckpuffer zu Dampfvolumen mit Druckpuffer kleiner als bei einer Anordnung ohne Pufferbehälter. Durch einen Pufferbehälter mit ausreichend grossem Volumen kann somit der Druckanstieg in der Kühlanordnung auf einen ungefährlichen Druckwert begrenzt werden.

Wird die Kühlanordnung nach der Erfindung für die supraleitende Erregerwicklung im Läufer einer elektrischen Maschine, insbesondere eines Turbogenerators, vorgesehen, so kann vorteilhaft in dem Läufer an mindestens einer seiner Stirnseiten der Pufferbehälter angeordnet sein. Während nämlich die Ausdehnung des Kühlmittelraumes im Inneren des Läuferkörpers sehr begrenzt ist, kann hingegen an den beiden Stirnseiten ein verhältnismässig grosses Volumen zur Verfügung gestellt werden, das anderweitig nicht benötigt wird und durch die axiale Ausdehnung der drehmomentübertragenden Teile des Läuferkörpers bedingt ist.

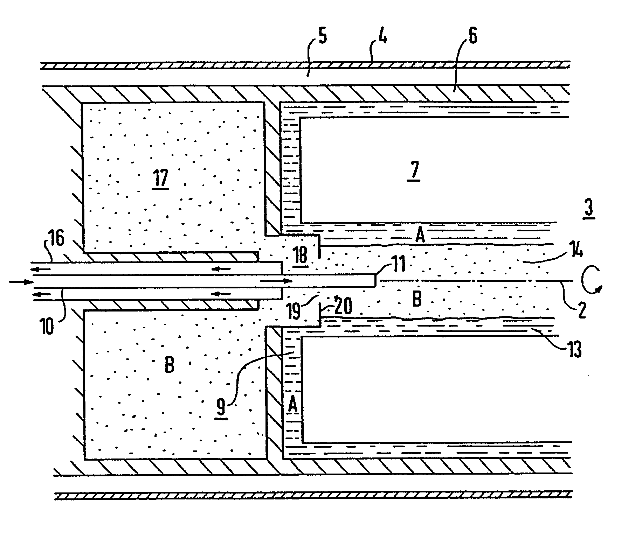

Zur weiteren Erläuterung der Erfindung und deren in den Unteransprüchen gekennzeichneten Weiterbildungen wird auf die Zeichnung Bezug genommen, in der ein Ausführungsbeispiel einer Anordnung zur Kühlung einer supraleitenden Magnetwicklung schematisch veranschaulicht ist.

Da die Kühlanordnung gemäss der Erfindung besonders vorteilhaft für eine supraleitende Erregerwicklung im Läufer einer elektrischen Maschine, insbesondere eines Turbogenerators, vorgesehen werden kann, ist in der Figur der an der Nicht-antriebsseite gelegene Teil des Läufers einer solchen Maschine als Längsschnitt angedeutet. Die in der Figur nicht näher ausgeführten Läuferteile entsprechen Teilen bekannter Maschinen mit supraleitenden Erregerwicklungen.

Ein in der Figur nicht näher ausgeführter, um eine Achse 2 drehbar gelagerter Läuferkörper 3 der Maschine enthält einen mitrotierenden, hohlzylindrischen Vakuummantel 4, der in radialer Richtung einen Vakuumraum 5 begrenzt, welcher einen zylindrischen Wicklungsträger 6 umschliesst. In diesem Wicklungsträger ist eine in der Figur nur angedeutete Erregerwicklung 7 angeordnet. Da die Leiter dieser Wicklung supraleitendes Material enthalten sollen, werden sie von Helium als Kühlmittel auf Betriebstemperatur gehalten. Hierzu ist ein mit 9 bezeichneter Kühlmittelraum vorgesehen, der zur Aufnahme des gesamten zur Kühlung der Erregerwicklung 7 erforderlichen Kühlmittels dient. Das in den Kühlmittelraum 9 einzuleitende flüssige Helium wird von einer externen Kühlmittelversorgungseinheit entnommen und an einem Kühlmittelanschlusskopf mit Hilfe einer in der Figur nicht dargestellten sogenannten Heliumkupplung von feststehenden Leitungsteilen in eine zentrale, mitrotierende Zuführungsleitung 10 überführt. Eine entsprechende Heliumkupplung ist beispielsweise aus der Veröffentlichung «Siemens-Forschungs- und Entwicklungsberichte», Bd. 5 (1976), Nr. 1, Seite 13 bekannt. An dem in den Kühlmittelraum 9 hineinragenden Ende 11 der Kühlmittelzuführungsleitung 10 wird das flüssige Kühlmittel in den Kühlmittelraum eingeleitet. Im Betriebszustand der Maschine und unter Einfluss zentrifugaler Kräfte bei Rotation des Läufers lagert sich dann die mit A bezeichnete flüssige Phase des Heliums in achsfernen Bereichen dieses Raumes an und nimmt einen Flüssigkeitsraum 13 ein, während sich zentral um die Achse ein von einer gasförmigen Phase B des Kühlmittels eingenommener Dampfraum 14 ausbildet. Die flüssige Phase A des Kühlmittels wird zur Kühlung der supraleitenden Erregerwicklung herangezogen, indem sie durch in der Figur nicht dargestellte Kühlmittelwege durch die Wicklung strömt. Die Strömung kann dabei z.B. aufgrund eines Selbstpump-Effektes in Thermosyphon-Schleifen erfolgen (vgl. z.B. die Dissertation von A. Bejan: «Improved Thermal Design of the Cryogenic Cooling System for a Superconducting Synchronous Generator», Ph. D.-Thesis, Massachusetts Institute of Technology, USA, Dezember 1974, Seiten 145 bis 167). Ferner können auch in der Erregerwicklung endende Kühlkanäle vorgesehen sein, die mit dem Kühlmittel überflutet sind (vgl. z.B. Bericht des Electric Power Research Institute, USA: «EPRI EL-663, Vol. 1, Project 429-2, Final Report», März 1978, Seiten 3-10 und 3-11). Die aufgrund von Verlusten in der Wicklung verdampften und zentral in dem Kühlmittelraum 9 angelagerten Kühlmittelanteile B werden teilweise aus dem Dampfraum 14 über eine Kühlmittelabgasleitung 16 abgeführt, welche beispielsweise ringförmig die zentrale Zuführungsleitung 10 konzentrisch umschliessen kann.

Bevor das Kühlmittelabgas den Läufer verlässt,

5        **0 038 504**        6

wird es im allgemeinen noch zur Kühlung weiterer Teile des Läuferkörpers 3 herangezogen. Die Kühlmittelabgasleitung ist dementsprechend lang ausgebildet. Ausserdem muss in der Regel ihr Querschnitt aus Platzgründen verhältnismässig klein dimensioniert werden. Ein grosser Strömungsquerschnitt würde nämlich einen Wärmetransport durch Kühlmittelkonvektion begünstigen und dadurch zusätzliche Verluste verursachen. Der Strömungswiderstand dieser Abgasleitung ist somit verhältnismässig gross. Tritt nun in der Erregerwicklung 7 ein sogenannter Quench, d.h. ein plötzlicher Übergang vom supraleitenden in den normalleitenden Zustand auf, so wird dabei das die Erregerwicklung kühlende Helium A inkurzer Zeit verdampft. Da jedoch der Strömungswiderstand der Kühlmittelabgasleitung 16 gross ist, können die entstandenen Abgasmengen nicht ausreichend schnell aus dem Kühlmittelraum 9 abgeführt werden, so dass mit einer entsprechend starken Druckerhöhung im Inneren des Läuferkörpers 3 zu rechnen wäre. Dies wird jedoch gemäss der Erfindung dadurch verhindert, dass an den Kühlmittelraum 9 mindestens ein grossvolumiger Pufferbehälter angeschlossen ist, dessen Volumen mindestens ebensogross wie das gesamte Volumen des Kühlmittelraumes 9, vorzugsweise mindestens 3mal grösser als das Kühlmittelraumvolumen ist. Während nämlich die Ausdehnung des Kühlmittelraumes 9 im Zentrum des Läuferkörpers 3 sehr begrenzt ist, sind an den beiden Stirnseiten verhältnismässig grosse Räume vorhanden, die sich durch die aus thermischen Gründen verhältnismässig lang auszubildenden drehmomentübertragenden Teile des Läuferkörpers ergeben und anderweitig nicht benötigt werden. Dementsprechend ist gemäss dem Ausführungsbeispiel nach der Figur ein im wesentlichen ringförmiger Pufferbehälter 17 vorgesehen, der über einen grossdimensionierten Verbindungsweg 18 an den im Betriebsfall der Maschine ausgebildeten Dampfraum 14 angeschlossen ist. Aufgrund des geringen Strömungswiderstandes des Verbindungsweges 18, der vorteilhaft mindestens 10mal kleiner als der Strömungswiderstand der Kühlmittelabführungsleitung 16 ist, stellt sich praktisch ungehindert ein Druckgleichgewicht zwischen dem Pufferbehälter 17 und dem von dem verdampften Kühlmittel eingenommenen Volumen des Kühlmittelraumes 9 ein. Der sich bei einem Quench einstellende Druck ist dann annähernd um das Verhältnis von Volumen des Kühlmittelraumes 9 ohne Pufferbehälterraum zu diesem Volumen mit Pufferbehälterraum kleiner als ohne Pufferbehälter. In supraleitenden Synchrongeneratoren ist auf diese Weise vorteilhaft eine Vergrösserung des dem Kühlmitteldampf zur Verfügung stehenden Volumens bzw. eine Verringerung des Druckes um mindestens einen Faktor 2, beispielsweise um einen Faktor 3 bis 5 möglich.

Bei der Kühlanordnung ist ferner gewährleistet, dass aus der Kühlmittelzuführungsleitung 10 austretendes flüssiges Helium nicht direkt in den Pufferbehälter 17 fliessen kann. Die Kühlmittelzuführungsleitung 10 ragt deshalb so weit in den Dampfraum 14 des Kühlmittelraums 9 hinein, dass der Verbindungsweg 18 zu dem Pufferbehälter 17 in ausreichender Entfernung von der Einmündungsstelle 11 der Kühlmittelzuführungsleitung 10 an den Dampfraum angeschlossen ist. Der Öffnungsradius der mit 19 bezeichneten Anschlussstelle ist dabei, z.B. durch eine konzentrisch zur Achse angeordnete, ringscheibenförmige Blende 20, so festgelegt, dass er kleiner als der Radius der Phasengrenze zwischen dem im Betriebsfall ausgebildeten Kühlmitteldampf B und der Kühlmittelflüssigkeit A ist. Es wird so verhindert, dass der Pufferbehälter 17 mit flüssigem Kühlmittel gefüllt wird.

Zwar ist es besonders vorteilhaft, entsprechende Pufferbehälter an zumindest einer der Stirnseiten des Läufers einer elektrischen Maschine mit supraleitender Erregerwicklung vorzusehen. Entsprechende Pufferbehälter lassen sich jedoch auch für nichtrotierende, badgekühlte Magnetwicklungen verwenden, falls nur ein verhältnismässig begrenzter Kühlmittelraum zur Verfügung steht und der Strömungswiderstand der vorzusehenden Abgasleitungen zu gross ist, um die bei einem Quench auftretenden grossen Mengen an Kühlmitteldampf ausreichend schnell abführen zu können.

## Patentansprüche

1. Anordnung zur Kühlung einer supraleitenden Magnetwicklung (7), insbesondere der supraleitenden Erregerwicklung (7) im Läufer (3) einer elektrischen Maschine, mit mindestens einem Kühlmittelraum (9), der im Betriebszustand eine dampfförmige (B) und eine flüssige (A) Phase eines über mindestens eine Zuführungsleitung (10) in ihn eingeleiteten kryogenen Kühlmittels enthält, dessen von der flüssigen Phase (A) eingenommener Flüssigkeitsraum (13) mit den Kühlmittelwegen durch die Magnetwicklung (7) verbunden ist und an dessen von der gasförmigen Phase (B) eingenommenen Dampfraum (14) mindestens eine Kühlmittelabführungsleitung (16) mit vorbestimmtem, grossem Strömungswiderstand angeschlossen ist, dadurch gekennzeichnet, dass an den von der gasförmigen Phase (B) eingenommenen Dampfraum (14) zusätzlich ein Pufferbehälter (17) über einen Verbindungsweg (18) mit verhältnismässig kleinem Strömungswiderstand angeschlossen ist.

2. Kühlanordnung nach Anspruch 1, dadurch gekennzeichnet, dass der Strömungswiderstand des Verbindungsweges (18) mindestens 10mal kleiner als der Strömungswiderstand der Kühlmittelabführungsleitung ist.

3. Kühlanordnung nach Anspruch 1 oder 2, dadurch gekennzeichnet, dass das Volumen des Pufferbehälters (17) mindestens ebenso gross, vorzugsweise mindestens 4mal so gross wie das Volumen des Kühlmittelraumes (9) ist.

4. Kühlanordnung für die supraleitende Erregerwicklung im Läufer einer elektrischen Maschine, insbesondere eines Turbogenerators, nach einem der Ansprüche 1 bis 3, dadurch gekennzeichnet, dass in dem Läufer (3) an mindestens einer seiner Stirnseiten ein Pufferbehälter (17) angeordnet ist.

5. Kühlanordnung nach Anspruch 4, dadurch gekennzeichnet, dass die Anschlussstelle (19) des Verbindungsweges (18) zu dem Pufferbehälter (17) an der Kühlmittelzu- und -abführungsseite des Läufers (3) vorgesehen und in Strömungsrichtung des zugeführten Kühlmittels gesehen vor der Mündungsöffnung (11) der Kühlmittelzuführungsleitung (10) angeordnet ist.

6. Kühlanordnung nach Anspruch 4 oder 5, dadurch gekennzeichnet, dass die Kühlmittelzuführungsleitung (10) ein Stück weit in den Kühlmittelraum (9) hineinragt.

## Claims

1. An arrangement for cooling a superconductive magnetic winding (7), in particular the superconductive exciting winding (7) in the rotor (3) of an electrical machine, said arrangement having at least one coolant space (9) which, in operation, contains a vapour phase (B) and a liquid phase (A) of a cryogenic coolant which is introduced into the coolant space through at least one supply line (10) and the liquid space (13) of which, which is occupied by the liquid phase (A), is connected to the coolant paths through the magnetic winding (7), and to the vapour space (14) of which coolant space, which is occupied by the gaseous phase (B), there is connected at least one coolant discharge line (16) having a predetermined, high flow resistance, characterised in that to the vapour space (14), occupied by the gaseous phase (B), a buffer reservoir (17) is further connected by means of a connection path (18) having a relatively low flow resistance.

2. A cooling arrangement according to Claim 1, characterised in that the flow resistance of the connection path (18) is at least 10 times smaller than the flow resistance of the coolant discharge line (16).

3. A cooling arrangement according to Claim 1 or Claim 2, characterised in that the volume of the buffer reservoir (17) is at least as large, preferably four times as large, as the volume of the coolant space (9).

4. A cooling arrangement for the superconductive exciting winding in the rotor of an electrical machine, in particular of a turbo-generator, according to one of Claims 1 to 3, characterised in that, in the rotor (3), a buffer reservoir (17) is arranged at at least one of its end faces.

5. A cooling arrangement according to Claim 4, characterised in that the connection point (19) of the connection path (18) to the buffer reservoir (17) is arranged at the coolant supply and coolant discharge side of the rotor (3), and before the outlet (11) of the coolant supply line (10) viewed in the direction of flow of the supplied coolant.

6. A cooling arrangement according to Claim 4 or Claim 5, characterised in that the coolant supply line (10) projects a little into the coolant space (9).

## Revendications

1. Dispositif pour le refroidissement d'un enroulement magnétique supraconducteur (7), notamment de l'enroulement d'excitation supraconducteur (7) dans le rotor (3) d'une machine électrique, comportant au moins une chambre (9) d'agent de refroidissement qui, en état de service, contient une phase gazeuse (B) et une phase liquide (A) d'un agent de refroidissement qui y est introduit par l'intermédiaire d'au moins une conduite d'amenée (10), dont l'espace (13) pour le liquide, occupé par la phase liquide, est relié aux trajets de l'agent de refroidissement par l'intermédiaire de l'enroulement magnétique et à l'espace (14) pour la vapeur, occupé par la phase gazeuse (B), de laquelle est raccordée au moins une conduite d'évacuation (16) de l'agent de refroidissement qui présente une résistance à l'écoulement importante prédéterminée, caractérisé par le fait qu'un réservoir d'accumulation (17) est en outre raccordé à l'espace (14) pour la vapeur, occupé par la phase gazeuse (B), par l'intermédiaire d'un trajet de liaison (18) qui présente une résistance à l'écoulement relativement faible.

2. Dispositif de refroidissement suivant la revendication 1, caractérisé par le fait que la résistance à l'écoulement du trajet de liaison (18) est au moins dix fois plus faible que la résistance à l'écoulement de la conduite (16) d'évacuation d'agent de refroidissement.

3. Dispositif de refroidissement suivant la revendication 1 ou 2, caractérisé par le fait que le volume du réservoir d'accumulation (17) est au moins aussi important, de préférence au moins quatre fois plus important, que le volume de la chambre (9) d'agent de refroidissement.

4. Dispositif de refroidissement pour l'enroulement d'excitation supraconducteur dans le rotor d'une machine électrique, notamment un turboalternateur, suivant l'une des revendications 1 à 3, caractérisé par le fait qu'un réservoir d'accumulation (17) est disposé dans le rotor (3) sur au moins une de ses faces latérales.

5. Dispositif de refroidissement suivant la revendication 4, caractérisé par le fait que le point de raccordement (19) du trajet de liaison (18) avec le réservoir d'accumulation (17) est prévu au niveau du côté du rotor (3) d'amenée et d'évacuation de l'agent de refroidissement, et est disposé devant l'ouverture (11) où débouche la conduite (10) d'amenée d'agent de refroidissement, vu dans le sens d'écoulement de l'agent de refroidissement amené.

6. Dispositif de refroidissement suivant la revendication 4 ou 5, caractérisé par le fait que la conduite (10) d'amenée d'agent de refroidissement pénètre sur une certaine distance dans la chambre (9) d'agent de refroidissement.